# EUROPEAN PATENT APPLICATION

(11) **EP 2 829 694 A1**
(43) Date of publication of application: **28.01.2015**
(21) Application number: 13755237.8
(22) Date of filing: 28.02.2013
(51) Int. Cl.: F01K 13/00, F01C 1/02, F01C 13/00, F01D 25/00

(54) **POWER GENERATING DEVICE**

(30) Priority: 02.03.2012 JP 2012047344
(71) Applicant: Yanmar Co., Ltd., Osaka-shi, Osaka 530-8311 (JP)
(72) Inventor: HAMACHI Yasuyuki, Osaka-shi Osaka 530-8311 (JP)
(74) Representative: Jostarndt, Hans-Dieter
(86) International application number: PCT/JP2013/055333
(87) International publication number: WO 2013/129550

(57) **Abstract**

Provided is a power generating device capable of effectively cooling an expander, a power generator, and a control device even in the outdoors. In the power generating device 1, an expander 2 driven by steam, a power generator 3 coupled with and driven by the output shaft 43 of the expander 2, and a control device 50 are placed on a base 21 and housed in a storage box 22. The storage box 22 has a partition member 30 provided upright from the base 21. The control device 50 is housed in one side partitioned by the partition member 30, and the expander 2 and the power generator 3 are housed in the other side. The base 21 is provided with a ventilation path 21c for taking outside air into the storage box 22, and the ceiling portion of the storage box 22 is provided with a net plate 31 and a protective roof 32 provided above and around the net plate 31 with a predetermined space there between to enable air to be discharged outside. The expander 2 and the power generator 3 are installed securely on a frame 27 provided upright on the base 21 and set apart from the base 21.

## Description

### Technical Field

The present invention relates to an art of a power generating device, especially an art of a power generating device having an expander driven by steam, a power generator connected to and driven by an output shaft of the expander, a control device, a base and a storage box.

### Background Art

Conventionally, a power generating device is known which has an expander whose working medium is water and a power generator connected to and driven by an output shaft of the expander. In the expander, the output shaft is rotated by expanding water at a vapor phase with high temperature and high pressure (hereinafter, simply referred to as "steam") in an expansion chamber formed by a fixed scroll and a swinging scroll. The power generator is connected to the output shaft and driven by rotation of the output shaft.

A package type power generating device is known in which the expander and the power generator are housed in one storage box (for example, see the Patent Literature 1).

A unit device is known in which a scroll type fluid machine is housed in a storage box, wherein an air-cooling ventilation duct is provided in a lower part of the scroll type fluid machine and connected to an intake side of an air-cooling fan (for example, see the Patent Literature 2).

### Prior Art Reference

### Patent Literature

Patent Literature 1: the Japanese Patent Laid Open Gazette 2007-74894
Patent Literature 2: the Japanese Patent Laid Open Gazette 2000-110767

### Disclosure of Invention

### Problems to Be Solved by the Invention

However, in the case in which duct and fan for air-cooling such as those of the unit device are provided in the conventional package type power generating device, when an air passage is provided in a vertical center of the storage box, a large fan is required for circulating air. When the expander is mounted on a floor, a circumference of a lower part of the expander is small and poorly ventilated, whereby the expander cannot be cooled enough. When the package type device is provided outdoors, foreign substances such as rain may enter the device via an intake hole and an exhaust hole provided in the storage box.

The present invention is provided in consideration of the conditions as mentioned above, and the purpose of the invention is to provide a power generating device which can cool an expander, a power generator and a control device efficiency even at outdoors. Means for Solving the Problems

The problems to be solved by the present invention have been described above, and subsequently, the means of solving the problems will be described below.

According to the present invention, in a power generating device, an expander driven by steam, a power generator connected to and driven by an output shaft of the expander, and a control device are mounted on a base and housed in a storage box. The storage box has a partition member. The partition member is provided upright on the base. The control device is housed in one of sides of the storage box divided by the partition member, and the expander and the power generator are housed in the other side thereof. A ventilation path for introducing outside air to an inside of the storage box is provided in the base. In a ceiling of the storage box, a net plate is provided, and a protective roof is provided above and around the net plate at a predetermined distance, whereby air can be discharged to the outside. The expander and the power generator are fixed to a frame provided upright on the base. The expander and the power generator are separated from the base.

According to the present invention, a blower sending air from a side of the control device to a side of the expander is provided in the partition member.

According to the present invention, the power generator is arranged below the expander. The expander has the output shaft projected horizontally. The power generator has an input shaft projected horizontally. The output shaft and the input shaft are connected by a belt.

According to the present invention, in an attachment part for the expander in the frame, an adjustment part is provided which can move the expander vertically for a fixed distance.

### Effect of the Invention

The present invention configured as the above brings the following effects.

According to the present invention, air flows upward from the lower side by the chimney effect, whereby the expander, the power generator and the control device can be cooled efficiently. By separating the expander and the power generator from the base, a passage in which the air flows is made wider, whereby the expander, the power generator and the control device can be cooled efficiently. By separating the expander and the power generator from the base, a space for the maintenance of the expander and the power generator is provided, whereby the maintenance can be performed efficiently. Entry of foreign substances such as rain can be prevented so as to improve durability, whereby the maintenance work can be omitted.

According to the present invention, the air becomes easy to flow upward from the lower side in the side of the control device in which the chimney effect is low, whereby the expander, the power generator and the control device can be cooled further efficiently.

According to the present invention, by separating the expander and the power generator from the base, the space for the maintenance of the expander and the power generator is provided, whereby the maintenance can be performed efficiently. The tension of the belt is generated by weight of the power generator, whereby the work of adjusting the tension of the belt can be simplified.

According to the present invention, by separating the expander and the power generator from the base, the space for the maintenance of the expander and the power generator is provided, whereby the maintenance can be performed efficiently. The work of adjusting the tension of the belt can be performed by moving vertically and fixing the expander or the power generator, whereby the work can be simplified.

### Brief Description of Drawings

[Fig. 1] Fig. 1 is a block diagram of an entire configuration of a power generating device according to an embodiment of the present invention.
[Fig. 2] Fig. 2 is a side view partially in section of a storage box.
[Fig. 3] Fig. 3 is a rear view partially in section of the storage box.
[Fig. 4] Fig. 4 is a plan view of a base.
[Fig. 5] Fig. 5 is a side view partially in section of an expander and a power generator.
[Fig. 6] Fig. 6 is a side view partially in section of the expander and the power generator.

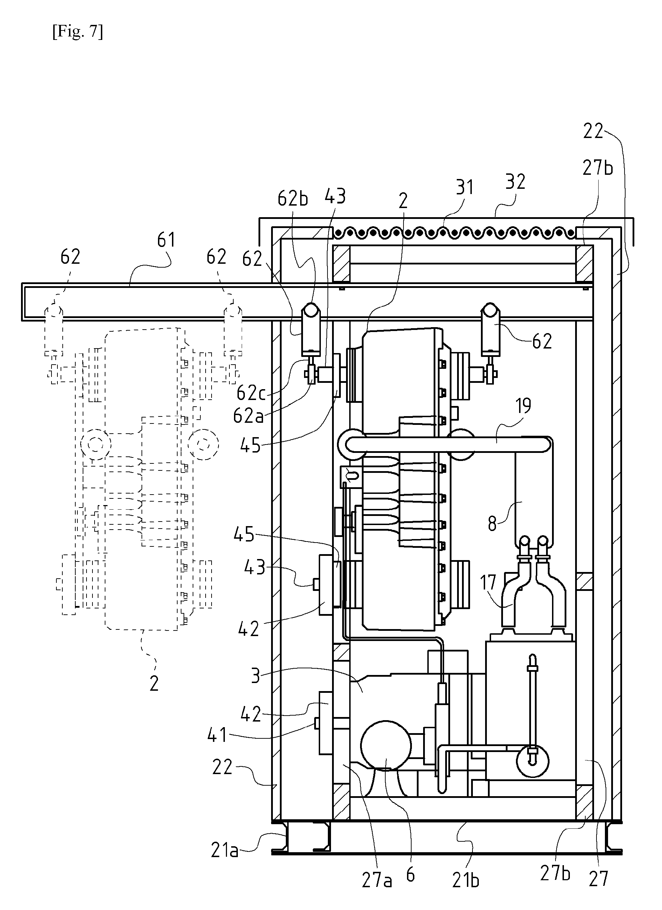

[Fig. 7] Fig. 7 is a side view partially in section of the storage box and the expander at the time of taking out the expander.

### Detailed Description of the Invention

Next, an explanation will be given on a mode for carrying out the invention.

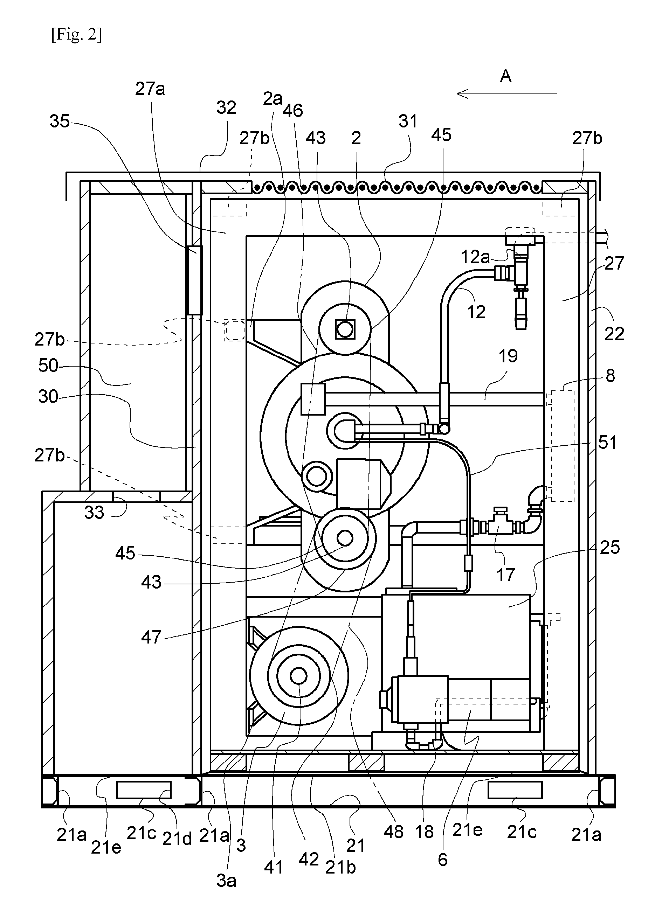

As shown in Fig. 2, a direction of an arrow A is defined as a front direction of a storage box 22.

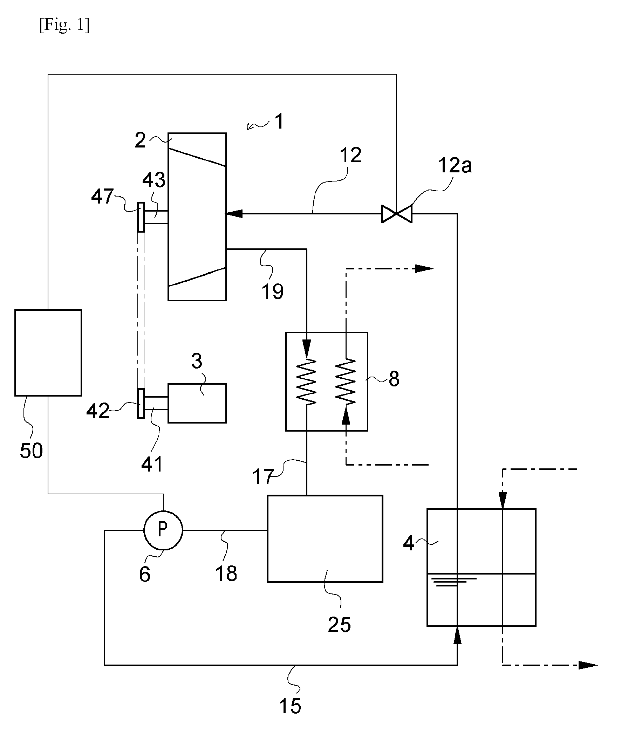

Firstly, an explanation will be given on a configuration of a power generating device 1 referring to a block diagram of Fig. 1.

The power generating device 1 has an expander 2 driven by steam, a power generator 3 connected to and driven by an output shaft 43 of the expander 2, a steam generator 4, a working medium supply pump 6, a condenser 8, and a control device 50.

The expander 2 is a scroll type fluid machine, and steam with high temperature and high pressure is supplied as a working medium from the steam generator 4 via a working medium passage 12 to the expander 2. The expander 2 drives the power generator 3 with the supplied steam as the working medium so as to generate electric power. Water is supplied from the working medium supply pump 6 via a working medium passage 15 to the steam generator 4. The working medium supply pump 6 sucks water, generated by condensing the steam by the condenser 8, via a working medium passage 17, a working medium tank 25 and a working medium passage 18. The steam discharged from the expander 2 is supplied via a working medium passage 19 to the condenser 8.

In the power generating device 1 configured as the above, the expander 2 exchanges energy of the steam with high temperature and high pressure generated by the steam generator 4 into rotational power so as to drive the power generator 3. The steam discharged from the expander 2 is condensed into the water by the condenser 8, and subsequently supplied to the expander 2 by the steam generator 4 as the steam with high temperature and high pressure again.

The control device 50 includes a CPU, a storage means and the like, and the CPU is a central processing unit and the storage means is a ROM in which control programs, maps and the like are stored and a RAM in which inputted data and the like are stored. The control device 50 switches a valve 12a provided in the working medium passage 12 so as to control an amount of the steam with high temperature and high pressure. The control device 50 controls a drive amount of the working medium supply pump 6 so as to control an amount of suction of the water generated by condensing the steam by the condenser 8. Accordingly, pressure of the steam inside the expander 2 can be controlled.

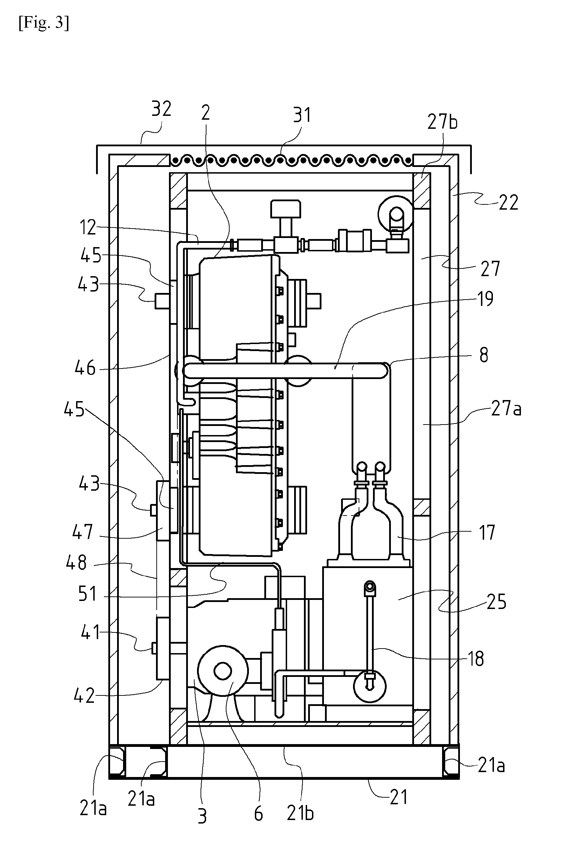

Next, an explanation will be given on arrangement of the power generating device 1 referring to Figs. 2 and 3.

The expander 2, the power generator 3 and the control device 50 constituting the power generating device 1 are mounted on a base 21 and housed in the storage box 22.

The storage box 22 is a rectangular parallelepiped box and housed therein with the expander 2, the power generator 3, the control device 50, the working medium tank 25 in which the liquid working medium is stored, and the working medium supply pump 6. A lower surface of the storage box 22 is opened, and the storage box 22 is provided above the base 21.

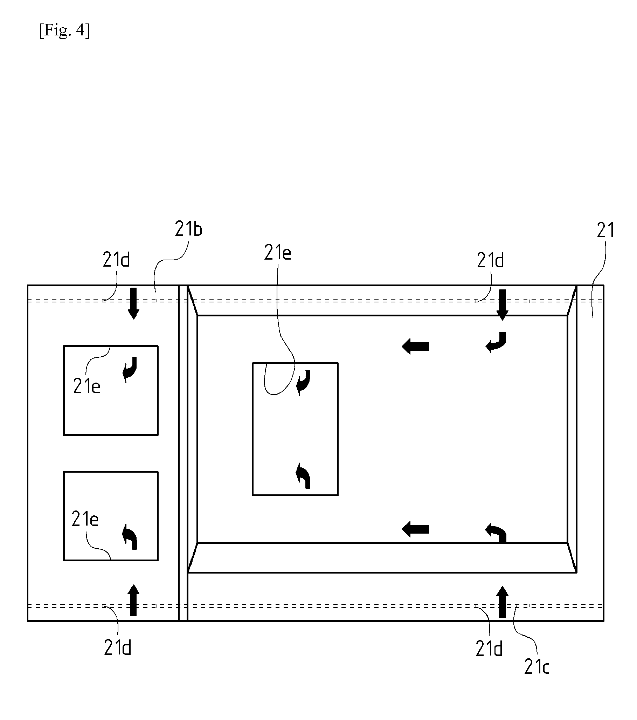

The base 21 is a member installed in a foundation such as the ground and is configured in that a plurality of steel materials 21a, which are U-like or rectangular shaped and generally called channel steel or rectangular steel pipes, are arranged longitudinally and laterally and fixed frame-like, and a plate member 21b is fixed to the upper surface of the frame. As shown in Figs. 2, 3 and 4, a ventilation path 21c for introducing outside air to the inside of the storage box 22 is provided in the base 21. The ventilation path 21c includes long holes 21d provided in side surfaces of the steel materials 21 a and long holes 21e provided in a part of the plate member 21b. The long holes 21d provided in the plate member 21b are arranged below a space in the storage box 22 in which the control device 50 is arranged and below a space in the storage box 22 in which the expander 2 and the power generator 3 are arranged. As sown arrows in Fig. arrows in Fig. 4, air passing through the long holes 21d passes through the inner space of the base 21 and sent above via the long holes 21e.

Inside the storage box 22, a plurality of frames 27 are provided.

The frames 27 include vertical frames 27a provided upright on the base 21 and a plurality of lateral frames 27b connecting upper ends and middle parts of the vertical frames 27a. In this embodiment, the four vertical frames 27a are provided, and lower ends thereof are provided upright on an upper surface of the base 21. The four vertical frames 27a are arranged at vertexes of a rectangular when viewed in plan, and the lateral frames 27b are provided laterally on sides of the rectangular joining the vertexes. The lateral frames 27b are provided in parallel to the horizontal direction, and connects the upper ends of the vertical frames 27a to each other and connects the middle parts of the vertical frames 27a to each other.

The storage box 22 has a partition member 30, and the partition member 30 is provided upright from the base 21. One of sides divided by the partition member 30 is housed therein with the control device 50, and the other side is housed therein with the expander 2 and the power generator 3.

In a ceiling of the storage box 22, a net plate 31 is provided, and a protective roof 32 is provided above and around the net plate 31 at a predetermined distance, whereby air can be discharged to the outside.

The net plate 31 is provided so as to cover a vent hole opened in the ceiling of the storage box 22 above the expander 2. In this embodiment, an outer perimeter of the net plate 31 is fixed to an inner side of the vent hole which is a square one size smaller than the ceiling. The net plate 31 prevents invasion of foreign substances such as dust and insects.

The protective roof 32 is provided above and around the net plate 31. An edge part bended downward is provided at an outer perimeter of the protective roof 32 so as to cover the ceiling of the storage box 22. The edge part is extended downward over a gap between the ceiling and the protective roof 32 so as to prevent invasion of rain and the like from the side. A gap is also provided between an inner perimeter of the edge part and an outer peripheral surface of the storage box 22.

Next, an explanation will be given on arrangement of various devices inside the storage box 22.

The storage box 22 is divided by the partition member 30 into two spaces, that is, the side in which the control device 50 is housed (hereinafter, referred to as "the side of the control device 50") and the side in which the expander 2 and the power generator 3 is housed (hereinafter, referred to as "the side of the expander 2"). Namely, the partition member 30 is provided upright in a longitudinal middle part of the base 21 and divides the storage box 22 into the two spaces by a plate body, and the front side is set to a housing chamber for the control device 50 and the rear side is set to a housing chamber for the expander 2 and the power generator 3.

In an upper part of the side of the control device 50 in the storage box 22, the control device 50 is arranged. A vent hole 33 is provided below the control device 50, and an opening is provided in a surface of the partition member 30 opposite to the control device 50, and a blower 35 is provided in the opening so as to send air from the side of the control device 50 to the side of the expander 2.

The vent hole 33 is provided above a long hole 21e provided in the base 21. Air passing through the ventilation path 21c of the base 21 is sent via the vent hole 33 to a space of the side of the control device 50 so as to cool the control device 50. The blower 35 sends the air, which is sent via the vent hole 33, from the side of the control device 50 to the side of the expander 2, and includes a propeller fan, a sirocco fan or the like for example.

In the storage box 22, in a lower part of the side of the expander 2, the power generator 3 is arranged at the side of the control device 50. The power generator 3 has an input shaft 41, and the input shaft 41 is projected along the horizontal direction and perpendicularly to the longitudinal direction. The power generator 3 is fixed to the frame 27 provided upright on the base 21. In more detail, the power generator 3 has an attachment plate 3a projected toward the frame 27. The attachment plate 3a is provided upward and downward from a front side of a center of the power generator 3. A screw hole is provided at an end of the attachment plate 3a. A power generator attachment plate 27c is provided laterally between the two vertical frames 27a of the frame 27. A long hole 27d as an adjustment part is provided in the power generator attachment plate 27c. A lengthwise direction of the long hole 27d is arranged vertically. By inserting a screw into the screw hole of the attachment plate 3a and the long hole 27d and fastening, the frame 27 is fixed to the power generator 3. The long hole 27d is arranged so that the power generator 3 can be fixed above and separately from the base 21 even if the screw is fastened to a lower end of the long hole 27d.

Accordingly, the power generator 3 can be fixed separately from the base 21. By changing a position of the screw vertically within a vertical length of the long hole 27d, a vertical position of the power generator 3 can be adjusted so as to control tension of a belt 48 discussed later.

An input pulley 42 is provided on the input shaft 41 of the power generator 3. The input pulley 42 is provided at an end of the input shaft 41, and the belt 48 is wound between the input pulley 42 and an output pulley 47 discussed later.

In the storage box 22, in the lower part of the side of the expander 2 and behind the power generator 3, the working medium tank 25 and the working medium supply pump 6 are arranged. The working medium tank 25 and the working medium supply pump 6 are fixed to the base 21.

The working medium which is condensed by the condenser 8 and becomes a liquid is stored in the working medium tank 25.

Above the power generator 3, the expander 2 is arranged. The expander 2 has output shafts 43 for taking out rotational power. The upper and lower two output shafts 43 are provided. A sprocket 45 is provided at a middle part of each of the output shafts 43, and a chain 46 is wound between the sprockets 45, whereby the two output shafts 43 are rotated synchronously. An axial direction of each of the output shafts 43 is in parallel to the input shaft 41 of the power generator 3.

The expander 2 is fixed to the frame 27 provided upright on the base 21. In more detail, the expander 2 has an attachment plate 2a projected toward the frame 27. The attachment plate 2a is projected upward and downward from a front side of a center of the expander 2. A screw hole is provided at an end of the attachment plate 2a. A long hole 27e as an adjustment part is provided in a rear surface of the lateral frame 27b. A lengthwise direction of the long hole 27e is arranged vertically. By inserting a screw into the screw hole of the attachment plate 2a and the long hole 27e and fastening, the frame 27 is fixed to the expander 2. The long hole 27e is arranged so that the expander 2 can be fixed above and separately from the power generator 3 even if the screw is fastened to a lower end of the long hole 27e. Accordingly, the expander 2 can be fixed above and separately from the base 21 and the power generator 3. By changing a position of the screw vertically within a vertical length of the long hole 27e, a vertical position of the expander 2 can be adjusted so as to control tension of the belt 48.

The output pulley 47 is provided on the lower output shaft 43 of the expander 2, and the belt 48 is wound between the output pulley 47 and the input pulley 42 of the power generator 3 and connected thereto.

Above the working medium tank 25 and behind the expander 2, the condenser 8 is arranged.

The working medium passage 12 supplying the steam with high temperature and high pressure from the steam generator 4 provided outside the storage box 22 to the expander 2 is provided from an upper part of a side surface of the storage box 22 to a space at the side of the expander 2, and one of ends of the working medium passage 12 is connected to the expander 2.

The working medium passage 19 sending the steam from the expander 2 to the condenser 8 is provided in the space at the side of the expander 2 in the storage box 22, and one of ends of the working medium passage 19 is connected to the expander 2 and the other end thereof is connected to the condenser 8.

The working medium passage 17 supplying the water generated by condensing the steam by the condenser 8 is provided in the space at the side of the expander 2 in the storage box 22, and one of ends of the working medium passage 17 is connected to the condenser 8 and the other end thereof is connected to the working medium tank 25.

The working medium passage 18 sucking the water stored in the working medium tank 25 is provided in the space at the side of the expander 2 in the storage box 22, and one of ends of the working medium passage 18 is connected to the working medium tank 25. The other end thereof is branched, and one of branched ends thereof is connected to the working medium supply pump 6 and the other branched end thereof is connected to a high pressure liquid supply passage 51. The other end of the high pressure liquid supply passage 51 is connected to the center of the expander 2. The high pressure liquid is supplied via the center of the expander 2 to an inside of the expander 2 and used as a lubricative material for the expander 2.

A pipe (not shown) is provided at a front end of the working medium supply pump 6, and the pipe is communicated with the working medium passage 15 at the outside.

As mentioned above, by arranging the expander 2 above the storage box 22, an upper part of the storage box 22 is warmer than a lower part thereof. Accordingly, air in the upper part of the storage box 22 with high temperature and low density is moved upward further and discharged outside via the net plate 31, and in the lower part of the storage box 22 with low temperature, an airflow using so-called chimney effect is generated in which negative pressure is operated and a fluid flows from the ventilation path 21c of the base 21.

The blower 35 sending air from the side of the control device 50 in the storage box 22 is provided. By the chimney effect, negative pressure is also operated in the space of the side of the control device 50 with lower temperature than the side of the expander 2 so that an airflow by the chimney effect is generated in addition to ventilation by the blower 35, whereby the blower 35 can be configured smaller than the usual.

Next, an explanation will be given on a method controlling the tension of the belt 48 connecting the output pulley 47 of the expander 2 to the input pulley 42 of the power generator 3.

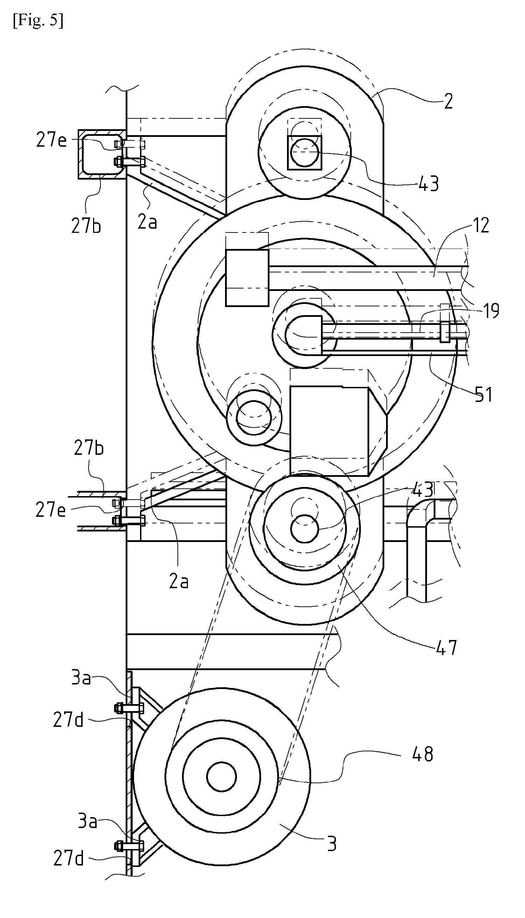

Firstly, the expander 2 is fixed to the lateral frame 27b at the lower end of the long hole 27e, and the belt 48 is wound between the output pulley 47 and the input pulley 42. Subsequently, as shown by two-dot lines in Fig. 5, the screw fixing the expander 2 is loosened and the screw is moved to an upper end of the long hole 27e so as to move the expander 2 upward. Accordingly, the tension of the belt 48 is increased. Then, the screw is fastened again at the moved position of the expander 2 so as to fix the expander 2 to the lateral frame 27b. According to the configuration, the tension of the belt 48 can be adjusted easily.

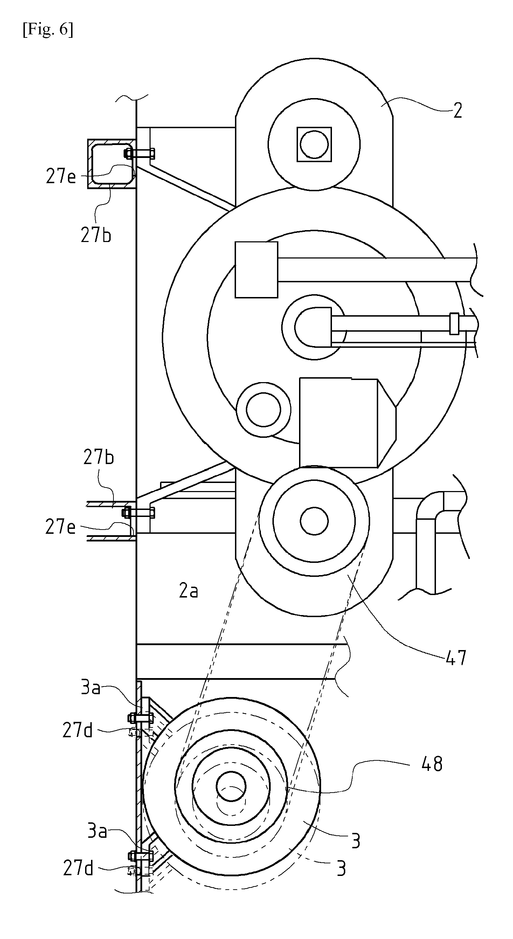

Similarly, as shown in Fig. 6, the power generator 3 is fixed to the frame 27 at an upper end of the long hole 27d, and the belt 48 is wound between the output pulley 47 and the input pulley 42. Subsequently, the screw fixing the power generator 3 is loosened and the screw is moved to the lower end of the long hole 27d so as to move the power generator 3 downward. Accordingly, the tension of the belt 48 is increased. Then, the screw is fastened again at the moved position of the power generator 3 so as to fix the power generator 3 to the frame 27. According to the configuration, work of adjusting the tension of the belt 48 can be simplified.

When the screw is moved to a middle part of the long hole 27d and then the power generator 3 is fixed, the power generator 3 is moved downward by weight of the power generator 3, whereby the tension is generated on the belt 48. Accordingly, work of adjusting the tension of the belt 48 can be performed easily.

A screw hole for fixing an expander take-out rail member 61 is provided in the lateral frame 27b. The expander take-out rail member 61 is detached under normal driving, and when the expander 2 is taken out at the time of maintenance or the like, the expander take-out rail member 61 is fixed to the lateral frame 27b by a screw.

The expander take-out rail member 61 includes H-section steel and is attached to the lateral frame 27b so that a lengthwise direction of the expander take-out rail member 61 is in agreement with a horizontal direction of the storage box 22 and in parallel to a lateral direction of the storage box 22. At the time of attachment, a tip of the expander take-out rail member 61 is projected laterally from the storage box 22 so that the expander 2 can be taken out from the storage box 22.

Rail pulleys 62 can be attached to both ends of the upper output shaft 43 of the expander 2. The rail pulleys 62 have fixation parts 62a fixed to the output shaft 43 and rollers 62b provided at both sides of the expander take-out rail member 61 so as to pinch the expander take-out rail member 61. The fixation parts 62a have screw parts 62c, and a vertical position can be adjusted by rotating the screw parts 62c. By putting the rollers 62b on an overhang part, which are provided in a lower side of the expander take-out rail member 61, and rotating the rollers 62b, the rail pulleys 62 can slid along the expander take-out rail member 61.

When the expander 2 is taken out from the storage box 22, the expander take-out rail member 61 is fixed to the lateral frame 27b by the screw, and the rail pulleys 62 are slid from an end of the expander take-out rail member 61 along the expander take-out rail member 61. Then, the fixation parts 62a of the rail pulleys 62 are fixed respectively to both ends of the output shaft 43 of the expander 2. By loosening the screw fixing the frame 27 to the expander 2, the expander 2 is supported while hung via the rail pulleys 62 by the expander take-out rail member 61. By sliding the rail pulleys 62 to an outer side of the storage box 22, the expander 2 is moved toward the storage box 22 while hung.

According to the configuration, the expander 2 can be moved easily to the outer side of the storage box 22, whereby the expander 2 can be maintained efficiently.

As the above, in the power generating device 1, the expander 2 driven by the steam, the power generator 3 connected to and driven by the output shaft 43 of the expander 2, and the control device 50 are mounted on the base 21 and housed in the storage box 22. The storage box 22 has the partition member 30. The partition member 30 is provided upright on the base 21. The control device 50 is housed in one of the sides of the storage box 22 divided by the partition member 30, and the expander 2 and the power generator 3 are housed in the other side thereof. The ventilation path 21c for introducing outside air to the inside of the storage box 22 is provided in the base 21. In the ceiling of the storage box 22, the net plate 31 is provided, and the protective roof 32 is provided above and around the net plate 31 at the predetermined distance, whereby air can be discharged to the outside. The expander 2 and the power generator 3 are fixed to the frame 27 provided upright on the base 21, and the expander 2 and the power generator 3 are separated from the base 21.

According to the configuration, air flows upward from the lower side by the chimney effect, whereby the expander 2, the power generator 3 and the control device 50 can be cooled efficiently. By separating the expander 2 and the power generator 3 from the base 21, a passage in which the air flows is made wider, whereby the expander 2, the power generator 3 and the control device 50 can be cooled efficiently. By separating the expander 2 and the power generator 3 from the base 21, a space for the maintenance of the expander 2 and the power generator 3 is provided, whereby the maintenance can be performed efficiently. Entry of foreign substances such as rain can be prevented so as to improve durability, whereby the maintenance work can be omitted.

The blower 35 sending air from the side of the control device 50 to the side of the expander 2 is provided in the partition member 30.

According to the configuration, the air becomes easy to flow upward from the lower side in the side of the control device 50 in which the chimney effect is low, whereby the expander 2, the power generator 3 and the control device 50 can be cooled further efficiently.

The power generator 3 is arranged below the expander 2. The expander 2 has the output shaft 43 projected horizontally. The power generator 3 has the input shaft 41 projected horizontally. The output shaft 43 and the input shaft 41 are connected by the belt 48.

According to the configuration, by separating the expander 2 and the power generator 3 from the base 21, the space for the maintenance of the expander 2 and the power generator 3 is provided, whereby the maintenance can be performed efficiently. The tension of the belt 48 is generated by weight of the power generator 3, whereby the work of adjusting the tension of the belt 48 can be simplified.

In the attachment part for the expander 2 in the frame 27, the long hole 27e is provided which can move the expander 2 vertically for a fixed distance.

According to the configuration, by separating the expander 2 and the power generator 3 from the base 21, the space for the maintenance of the expander 2 and the power generator 3 is provided, whereby the maintenance can be performed efficiently. The work of adjusting the tension of the belt 48 can be performed by moving vertically and fixing the expander 2, whereby the work can be simplified.

The embodiment of the present invention has been explained above. However, the above configuration may be changed as described below.

The number and shape of the long holes 21d and 21e of the base 21 are not limited to the above. For example, the three or more long holes 21d may alternatively be provided, and the two, four or more long holes 21e may alternatively be provided.

The adjustment parts adjusting the vertical positions of the expander 2 and the power generator 3 are not limited to the long holes 27d and 27e. For example, long holes may alternatively be provided in the attachment plate 2a of the expander 2 and the attachment plate 3a of the power generator 3.

The arrangement and number of the blower 35 are not limited to the above. For example, two or more blowers may alternatively be provided in the partition member 30.

### Industrial Applicability

The present invention can be used for a power generating device having an expander driven by steam, a power generator connected to and driven by an output shaft of the expander, a control device, a base and a storage box.

### Description of Notations

- 1: power generating device
- 2: expander
- 3: power generator
- 21: base
- 21c: ventilation path
- 22: storage box
- 27: frame
- 27e: long hole (adjustment part)
- 30: partition member
- 31: net plate
- 32: protective roof
- 35: blower
- 41: input shaft
- 43: output shaft
- 48: belt
- 50: control device

## Claims

1. A power generating device,
wherein an expander driven by steam, a power generator connected to and driven by an output shaft of the expander, and a control device are mounted on a base and housed in a storage box, and
wherein the storage box has a partition member, the partition member is provided upright on the base, the control device is housed in one of sides of the storage box divided by the partition member, and the expander and the power generator are housed in the other side thereof,
**characterized in that**
a ventilation path for introducing outside air to an inside of the storage box is provided in the base,
in a ceiling of the storage box, a net plate is provided, and a protective roof is provided above and around the net plate at a predetermined distance, whereby air can be discharged to the outside,
the expander and the power generator are fixed to a frame provided upright on the base, and
the expander and the power generator are separated from the base.

2. The power generating device according to claim 1, wherein a blower sending air from a side of the control device to a side of the expander is provided in the partition member.

3. The power generating device according to claim 1 or 2,
wherein the power generator is arranged below the expander,
wherein the expander has the output shaft projected horizontally,
wherein the power generator has an input shaft projected horizontally, and
wherein the output shaft and the input shaft are connected by a belt.

4. The power generating device according to claim 1, wherein in an attachment part for the expander in the frame, an adjustment part is provided which can move the expander vertically for a fixed distance.
